# EUROPEAN PATENT SPECIFICATION

(11) **EP 2 022 602 B1**
(45) Date of publication and mention of the grant of the patent: **27.04.2011**
(21) Application number: 08159503.5
(22) Date of filing: 02.07.2008
(51) Int. Cl.: B23Q 11/00, B02C 18/06, A47L 9/00

(54) **Device for removing chips in machine tools**
Vorrichtung zum Entfernen von Spänen bei Werkzeugmaschinen
Dispositif pour enlever des copeaux dans des machines-outils

(30) Priority: 25.07.2007 IT MO20070245
(43) Date of publication of application: 11.02.2009
(73) Proprietor: SCM Group S.p.A., 47900 Rimini (IT)
(72) Inventor: Coltro, Davide, 36010 Monticello Conte Otto (VI) (IT); Meneghetti, Giovanni, 36030 Caldonio (VI) (IT)
(74) Representative: Crugnola, Pietro

(56) References cited:
- EP-A- 0 795 266
- DE-A1- 2 261 297
- DE-C- 634 784
- DE-C- 766 255
- DE-C1- 19 720 582
- GB-A- 861 749

## Description

The invention relates to a device for removing machining chips made of plastics or similar materials from a machine tool.

In particular, the invention relates to a device for removing machining chips made of plastics or similar materials from edgebanding machines used in the woodworking industry for edgebanding panels made of wood or similar materials.

In particular, such edgebanding machines are used for applying, and subsequently chip-forming machining, edges made of plastics or similar materials on a panel made of wood or similar materials.

Such edgebanding machines comprise a frame supporting a movement line extending along an advance direction of the panel.

The frame supports a plurality of work stations, comprising, for example, an edgebanding station and a finishing station. The edgebanding station comprises an edgebanding unit arranged for applying to each side of the panel, by gluing, an edge made of plastics.

This edge has dimensions that are greater than a thickness of the panel, i.e. the edge exceeds the panel, so as to cover completely the panel.

The finishing station, positioned downstream of the edgebanding station with respect to the advance direction, comprises a plurality of substations, each of which is provided with a cutting unit.

Each cutting unit comprises respective cutting tools, such as, for example, shaped bits, for performing on such edges chip-forming machinings.

Such cutting units may, for example, comprise respectively a trimming unit, an edge-sanding unit and a rounding/profiling unit.

In particular, the trimming unit removes an upper part and a lower part of the edge that exceeds the thickness of the panel, the edge-sanding unit makes a connecting radius between the edge applied to the thickness of the panel and the upper and lower surface of the panel, whilst the rounding/profiling unit rounds the profile of the edge after it has been applied to the panel.

In use, the cutting units, i.e. the trimming unit, the edge-sanding unit and the rounding/profiling unit, produce chips, i.e. machining chips.

Such chips adhere, not only to the panels being machined, but also to the cutting tools and to parts of the edgebanding machine adjacent to the cutting tools, and may cause malfunctions of the edgebanding machine, such as, for example jams, which can cause frequent machine downtime in addition to a worsening of the aesthetic quality of the machining.

For this reason, a device for removing machining chips is fixed to each cutting unit.

Devices for removing machining chips from an edgebanding machine are known that comprise a suction hood.

This suction hood is fixed to the aforesaid cutting units and sucks and removes the machining chips.

In particular, this suction hood comprises an inlet and an outlet for such chips, such inlet being positioned near the aforesaid cutting tools and such outlet being connected to a further device arranged for making a vacuum between the inlet and the outlet.

A drawback of the devices disclosed above is that they are not very effective.

In fact, such devices cause frequent downtime of the edgebanding machine with consequent reduction of the productivity of the edgebanding machine.

This is due to the fact that the aforesaid machining chips, having the shape of long, thin and corrugated yarns, easily tend to get caught inside the suction hood.

In particular, in use, after a first yarn has got caught, the subsequent yarns tend to be attached to the first yarn until they rapidly form a hank that is such as to obstruct the suction hood.

Consequently, frequent machine downtime is required for maintenance interventions to remove such a hank from the suction hood.

Sometimes, in order to overcome this drawback, an aspirating power of the further device was increased to achieve the vacuum, or the diameter of the suction hood was increased.

However, this not only does not solve the aforesaid drawback but also increases the costs to be borne to make the device and increases the overall dimensions of the device.

EP-A-0795266 discloses a vacuum chopper for collecting and crushing lawn and the like. Such a chopper has a housing having a main chamber centered on an axis, an inlet port opening axially into the chamber and an outlet port opening tangentially of the chamber. A rotor disk is positioned in the chamber. The rotor disk has an axially directed face provided with a predetermined number of radially and axially extending and angularly spaced vanes having outer edges. At least two of the vanes are provided on their outer edges with axially outwardly projecting chopper blades. A motor in the housing connected to the rotor disk rotates the disk about the axis and thereby draws the material in through the inlet, coarsely chops the material with the blades, and expels the coarsely chopped material with the vanes through the outlet port.

DE766255 describes a planing machine provided with a suction apparatus. Such an apparatus comprises an impeller for sucking chips. The impeller is connected directly to a pulley that is located on a shaft of the machine. The suction apparatus further comprises a casing cantilevered on a machine frame.

DE634784 discloses a cylinder-boring machine having a housing for a boring-bar adapted to be secured in position for operation on a cylinder and suction means for conveying cuttings away from the cylinder through the upper end thereof. The boring-spindle is carried in a bearing in the housing and is driven by belt means from a countershaft which is connected through the gear box to an electric motor. A fan secured to the upper end of the motor spindle, draws the cuttings as they are produced, from the tools along the passage in the housing, to an outlet.

An object of the invention is to improve the devices for removing chips made of plastics or similar materials from a machine tool, in particular from an edgebanding machine.

A further object is to provide more effective devices than known devices.

In a first aspect of the invention there is provided a device for removing machining chips made of plastics or similar materials as defined in claim 1.

Owing to this aspect of the invention it is possible to make a device for removing machining chips that is more effective than known devices.

In fact, said cutting means, for example positioned near said inlet, intercepts said chips and chops up said chips, reducing the chips into small parts that are not liable to get caught in and are more easily suctionable from said suction-hood means.

In a second aspect of the invention an edgebanding machine is provided for edgebanding panels made of wood or similar materials comprising a device as disclosed in the aforesaid first aspect.

The invention can be better understood and implemented with reference to the attached drawings that illustrate some embodiments thereof by way of non-limiting example, in which:
Figure 1 is a schematic perspective view of a first embodiment of a device for removing machining chips;
Figure 2 is a schematic perspective view of a second embodiment of a device for removing machining chips;
Figure 3 is a schematic perspective view of a third embodiment of a device for removing machining chips.

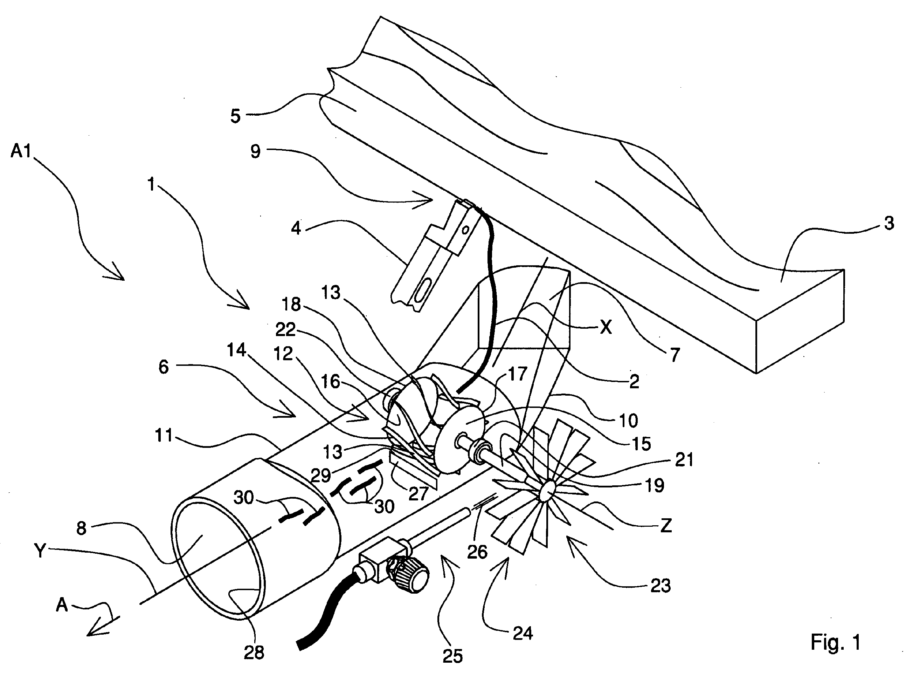

With reference to Figure 1 there is shown a first embodiment A1 of a device 1 for removing a machining chip 2 made of plastics or similar materials from a machine tool, which is not shown, in particular from an edgebanding machine used in the woodworking industry foe edgebanding a panel 3 made of wood or similar materials.

The device 1 is fixed to a cutting unit, or operating unit, which is not shown, of the edgebanding machine.

The cutting unit comprises a cutting tool 4 for machining by chip-forming machining an edge 5 previously applied to the panel 3.

The device 1 comprises a tubular suction hood 6, to suck the chips 2.

The suction hood 6 comprises a first portion 10 extending substantially parallely to a first axis X and a second portion 11, partially shown by a broken line, extending substantially parallely to a second axis Y, transverse to the first axis X.

In particular, the first portion 10 is positioned upstream of the second portion 11, having substantially the shape of a hollow cylinder, with respect to a suction direction A of the chips 2.

In an embodiment of the invention, which is not shown, the second portion 11 has the shape of a hollow parallelepipedon with a rectangular or square base.

The suction hood 6 comprises an inlet 7, obtained in the first portion 10, and an outlet 8, obtained in the second portion 11, for the chips 2.

In particular, the inlet 7 is positioned near a working zone 9 of the cutting tool 4, whilst the outlet 8 is connected to a further device, which is not shown, arranged for making a vacuum inside the suction hood 6 for sucking the chips 2.

The device 1 further comprises cutting means 12 for chopping up, inside the suction hood 6, the chips 2 into parts 30 of reduced dimensions.

The cutting means 12 is positioned inside the suction hood 6 near the inlet 7.

The cutting means 12 comprises a plurality of first blades 13.

Each first blade 13 has a first curvilinear cutting profile 14, which is for example helical.

The first blades 13 are supported by, and interposed between, a first plate 15 and a second plate 16.

The first plate 15 and the second plate 16, which are opposite one another, are substantially disc-shaped and are substantially perpendicular to a rotation axis Z around which the first blades 13 are rotatable, this rotation axis Z being transverse to the first axis X and to the second axis Y.

In particular, the first blades 13 are fixed, suitably spaced, at respective ends of the first blades 13, to a first edge portion 17 and to a second edge portion 18, that are substantially circular, respectively of the first plate 15 and of the second plate 16, so that the first cutting profiles 14 project outside the first edge portion 17 and the second edge portion 18.

The device 1 further comprises a first shaft 19 and a second shaft, which is not shown, both extending along and rotatable around the rotation axis Z.

In particular, the first shaft 19 and the second shaft are respectively fixed to and project outside from the first plate 15 and second plate 16.

Further, the first shaft 19 and the second shaft are rotatably fixed to the second portion 11 by respectively a first bearing 21 and a second bearing 22.

In particular, the first shaft 19 projects outside the suction hood 6 and is connected to and rotated by a rotor 23 provided with blading 24.

The device 1 further comprises dispensing means 25 for dispensing pressurised air arranged for dispensing pressurised air 26 to the blading 24 for rotating the blading.

The cutting means 12 further comprises a second blade 27 and a third blade, which is not shown, which are opposite one another, that are fixed to an inner wall 28 of the suction hood 6.

In particular, the second blade 27 and the third blade, extending substantially parallely to the rotation axis Z, are positioned downstream of the first blades 13 with respect to the suction direction A, and on opposite parts of the first plate 15 and the second plate 16.

The second blade 27 and the third blade comprise respectively a second cutting profile 29 and a third cutting profile, which is not shown, which are mutually opposite, and arranged for interacting with the first cutting profiles 14 for chopping up the chips 2.

In particular, the second cutting profile 29 and the third cutting profile are substantially rectilinear.

In an embodiment of the invention, which is not shown, there is provided a single blade fixed to the inner wall 28.

In use, the dispensing means 25 dispenses the pressurised air 26 that rotates the blading 24.

The blading 24 is connected to and rotates the first shaft 19, which in turn rotates, via the first plate 15, the first blades 13.

In this manner, the long, thin and corrugated chips 2 produced by the cutting tool 4 and sucked inside the suction hood 6 is chopped up by the first rotating blades 13 cooperating with the second fixed blade 27 and with the third fixed blade.

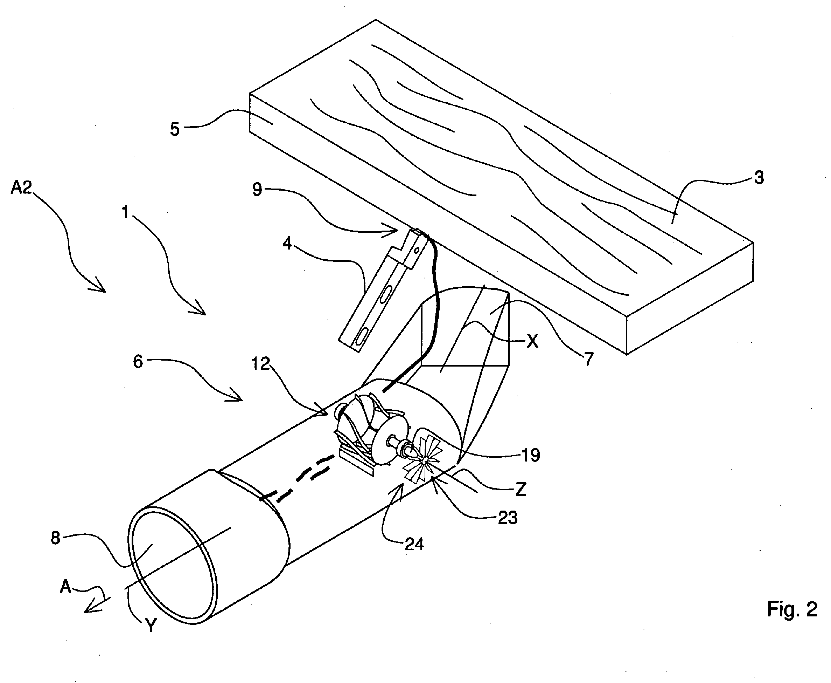

With reference to Figure 2 there is shown a second embodiment A2 of the device 1.

In the second embodiment A2, the rotor 23 is received inside the suction hood 6 and is rotated by the vacuum created by the aforesaid further device.

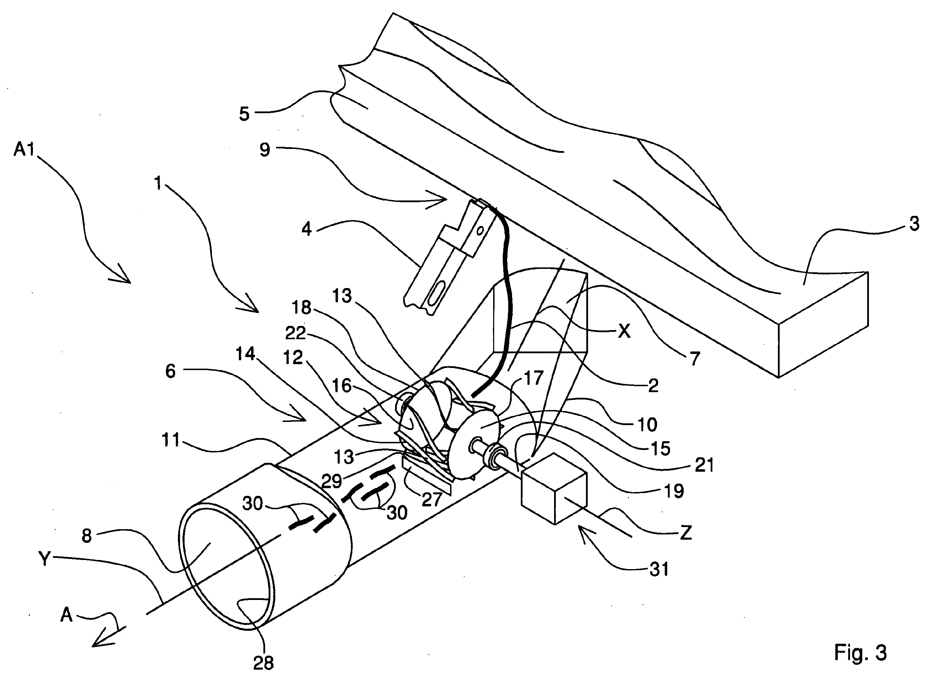

With reference to Figure 3 there is shown a third embodiment A3 of the device 1.

In the third embodiment A3, the first shaft 19 is fixed to, and rotated by a motor 31, for example an electric motor.

It should be noted how the device 1 disclosed above is more effective than known devices.

In fact, the cutting means 12, intercepts the chips 2 and chops up the chips 2 by reducing the chips 2 into small parts 30 that are not liable to get caught in and are more easily suctionable from the suction hood 6.

## Claims

1. Device for removing machining chips (2) made of plastics or similar materials, comprising suction-hood means (6), provided with an inlet (7) and with an outlet (8) for said chips (2), arranged for sucking said chips (2) between said inlet (7) and said outlet (8), and cutting means (12), received in said suction-hood means (6) between said inlet (7) and said outlet (8), for chopping up said chips (2), said cutting means (12) comprising first cutting means (13) rotatably supported by said suction-hood means (6), rotatable around, and extended substantially parallel to, a rotation axis (Z) that is transverse to an axis (X, Y) along which said suction means(6) extends, **characterised in that** said cutting means (12) comprises second cutting means (27) fixed to a wall (28) of said suction-hood means (6) and arranged for interacting with said first cutting means (13) for chopping up said chips (2), said second cutting means (27) extending substantially parallel to said rotation axis (Z).

2. Device according to claim 1, wherein said cutting means (12) is positioned near said inlet (7).

3. Device according to claim 1, or 2, wherein said first cutting means (13) has a curvilinear cutting profile (14), in particular substantially helicoidal.

4. Device according to any preceding claim, wherein said first cutting means comprises a plurality of blades (13).

5. Device according to claim 4, wherein said cutting means (12) comprises supporting means (15, 16) for rotatably supporting said first cutting means (13), said supporting means (15, 16) comprising an edge portion (17, 18), to which are fixed, at a certain mutual distance, said blades (13).

6. Device according to claim 5, as claim 4 is appended to claim 3, wherein said curvilinear cutting profile (14) projects from said edge portion (17, 18).

7. Device according to claim 5, or 6, wherein said supporting means comprises a first support (15) and a second support (16) that are mutually opposite and fixed to opposite ends of said first cutting means (13).

8. Device according to any preceding claim, wherein said second cutting means (27) comprises a further substantially rectilinear cutting profile (29).

9. Device according to any preceding claim, wherein said second cutting means (27) is positioned downstream of said first cutting means (13) with respect to a suction direction (A).

10. Device according to any preceding claim, wherein said second cutting means comprises a first blade (27) and a second blade, which are opposite one another.

11. Device according to any preceding claim, and comprising driving means (23; 31), connected to and rotating said first cutting means (13), said driving means (23; 31) comprising motor means, in particular an electric motor (31), or a rotor means (23).

12. Device according to claim 11, wherein said rotor means (23) is positioned outside said suction-hood means (6).

13. Device according to claim 11, or 12, and comprising dispensing means (25) for dispensing pressurised air (26) for rotating said rotor means (23).

14. Edgebanding machine for edgebanding panels (3) comprising a device for removing machining chips (2) made of plastics or similar materials as claimed in claims 1 to 13.

## Patentansprüche

1. Vorrichtung zum Entfernen von aus Kunststoff oder ähnlichen Materialien bestehenden Spänen (2), umfassend ein Absaugmittel (6), das mit einem Einlass (7) und einem Auslass (8) für die Späne (2) ausgestattet ist, wobei das Absaugmittel ausgestaltet ist, die Späne (2) zwischen den Einlass (7) und den Auslass (8) zu saugen, und ein Schneidmittel (12), das in dem Absaugmittel (6) zum Zerkleinern der Späne (2) zwischen dem Einlass (7) und dem Auslass (8) angeordnet ist, wobei das Schneidmittel (12) ein erstes Schneidmittel (13) umfasst, das drehbar in dem Absaugmittel (6) gelagert ist, wobei das erste Schneidmittel drehbar um eine Drehachse (Z) ist und sich im Wesentlichen parallel zu der Drehachse (Z) erstreckt, die zu einer Achse (X, Y) quer verläuft, entlang welcher sich das Absaugmittel (6) erstreckt, **dadurch gekennzeichnet, dass** das Schneidmittel (12) ein zweites Schneidmittel (27) umfasst, das an einer Wand (28) des Absaugmittels (6) befestigt und ausgestaltet ist, zum Zerkleinern der Späne (2) mit dem ersten Schneidmittel (13) zusammenzuwirken, wobei sich das zweite Schneidmittel (27) im Wesentlichen parallel zu der Drehachse (Z) erstreckt.

2. Vorrichtung gemäß Anspruch 1, wobei das Schneidmittel (12) nahe dem Einlass (7) angeordnet ist.

3. Vorrichtung gemäß Anspruch 1 oder 2, wobei das erste Schneidmittel (13) ein krummliniges, insbesondere ein im Wesentlichen schraubenartiges Schneidprofil (14) aufweist.

4. Vorrichtung gemäß einem der vorhergehenden Ansprüche, wobei das erste Schneidmittel eine Vielzahl von Klingen (13) umfasst.

5. Vorrichtung gemäß Anspruch 4, wobei das Schneidmittel (12) ein Lagermittel (15, 16) zum drehbaren Lagern des ersten Schneidmittels (13) umfasst, wobei das Lagermittel (15,16) einen Randbereich (17, 18) umfasst, an welchem die Klingen (13) in einem bestimmten Abstand voneinander befestigt sind.

6. Vorrichtung gemäß Anspruch 5, da Anspruch 4 sich auf Anspruch 3 zurückbezieht, wobei das krummlinige Schneidprofil (14) über den Randbereich (17, 18) hinausragt.

7. Vorrichtung gemäß Anspruch 5 oder 6, wobei das Lagermittel ein erstes Lager (15) und ein zweites Lager (16) umfasst, die sich gegenüberliegen und an sich gegenüberliegenden Enden des ersten Schneidmittels (13) befestigt sind.

8. Vorrichtung gemäß einem der vorhergehenden Ansprüche, wobei das zweite Schneidmittel (27) ein weiteres im Wesentlichen gradliniges Schneidprofil (29) umfasst.

9. Vorrichtung gemäß einem der vorhergehenden Ansprüche, wobei das zweite Schneidmittel (27) hinsichtlich einer Sogrichtung (A) hinter dem ersten Schneidmittel (13) angeordnet ist.

10. Vorrichtung gemäß einem der vorhergehenden Ansprüche, wobei das zweite Schneidmittel eine erste Klinge (27) und eine zweite Klinge umfasst, die sich gegenüberliegen.

11. Vorrichtung gemäß einem der vorhergehenden Ansprüche, die ein Antriebsmittel (23; 31) umfasst, das mit dem ersten Schneidmittel (13) verbunden ist und dieses dreht, wobei das Antriebsmittel (23; 31) einen Motor umfasst, insbesondere einen Elektromotor (31) oder ein Rotormittel (23).

12. Vorrichtung gemäß Anspruch 11, wobei das Rotormittel (23) außerhalb des Absaugmittels (6) angeordnet ist.

13. Vorrichtung gemäß Anspruch 11 oder 12, die auch ein Ausgabemittel (25) zum Ausgeben von Druckluft (26) zum Drehen des Rotormittels (23) umfasst.

14. Kantenumleimmaschine zum Kantenumleimen von Platten (3), umfassend eine Vorrichtung zum Entfernen von Spänen (2) bestehend aus Kunststoff oder ähnlichen Materialien, wie in den Ansprüchen 1 bis 13 beansprucht.

## Revendications

1. Dispositif pour évacuer des copeaux d'usinage (2) en matière plastique ou matériaux similaires, comprenant des moyens de bras d'aspiration (6) pourvus d'une entrée (7) et d'une sortie (8) pour lesdits copeaux (2), agencés pour aspirer lesdits copeaux (2) entre ladite entrée (7) et ladite sortie (8), et des moyens coupants (12), reçus dans lesdits moyens de bras d'aspiration (6) entre ladite entrée (7) et ladite sortie (8), pour hacher lesdits copeaux (2), lesdits moyens coupants (12) comprenant des premiers moyens coupants (13) supportés de manière rotative par lesdits moyens de bras d'aspiration (6), rotatifs autour d'un axe de rotation (Z) et s'étendant de manière sensiblement parallèle à lui, axe qui est transversal à un axe (X, Y) le long duquel s'étendent lesdits moyens d'aspiration (6), ***caractérisé en ce que*** lesdits moyens coupants (12) comprennent des deuxièmes moyens coupants (27) fixés à une paroi (28) desdits moyens de bras d'aspiration (6) et prévus pour interagir avec lesdits premiers moyens coupants (13) pour le hachage desdits copeaux (2), lesdits deuxièmes moyens coupants (27) s'étendant de manière sensiblement parallèle audit axe de rotation (Z).

2. Dispositif selon la revendication 1, dans lequel lesdits moyens coupants (12) sont placés à proximité de ladite entrée (7).

3. Dispositif selon la revendication 1 ou 2, dans lequel lesdits premiers moyens coupants (13) ont un profil coupant curviligne (14), en particulier sensiblement hélicoïdal.

4. Dispositif selon l'une quelconque des revendications précédentes, dans lequel lesdits premiers moyens coupants comprennent une pluralité de lames (13).

5. Dispositif selon la revendication 4, dans lequel lesdits moyens coupants (12) comprennent des moyens de support (15, 16) pour supporter de manière rotative lesdits premiers moyens coupants (13), lesdits moyens de support (15, 16) comprenant une portion de rebord (17, 18) auxquels sont fixées, à une certaine distance mutuelle, lesdites lames (13).

6. Dispositif selon la revendication 5, lorsque la revendication 4 est dépendante de la revendication 3, dans lequel ledit profil coupant curviligne (14) fait saillie de ladite portion de rebord (17, 18).

7. Dispositif selon la revendication 5 ou 6, dans lequel lesdits moyens de support comprennent un premier support (15) et un deuxième support (16) qui sont mutuellement opposés et fixés à des extrémités opposées desdits premiers moyens coupants (13).

8. Dispositif selon l'une quelconque des revendications précédentes, dans lequel lesdits deuxièmes moyens coupants (27) comprennent un autre profil coupant (29) sensiblement rectiligne.

9. Dispositif selon l'une quelconque des revendications précédentes, dans lequel lesdits deuxièmes moyens coupants (27) sont placés en aval desdits premiers moyens coupants (13) par rapport à une direction d'aspiration (A).

10. Dispositif selon l'une quelconque des revendications précédentes, dans lequel lesdits deuxièmes moyens coupants comprennent une première lame (27) et une deuxième lame, qui sont opposées l'une à l'autre.

11. Dispositif selon l'une quelconque des revendications précédentes, et comprenant des moyens d'entraînement (23 ; 31), reliés auxdits premiers moyens coupants (13) et les faisant tourner, lesdits moyens d'entraînement (23 ; 31) comprenant des moyens de moteur, en particulier un moteur électrique (31), ou des moyens de rotor (23).

12. Dispositif selon la revendication 11, dans lequel lesdits moyens de rotor (23) sont placés à l'extérieur desdits moyens de bras d'aspiration (6).

13. Dispositif selon la revendication 11 ou 12, et comprenant des moyens d'alimentation (25) pour fournir de l'air sous pression (26) pour entraîner en rotation lesdits moyens de rotor (23).

14. Machine de placage de chants pour l'application de chants sur des panneaux (3), comprenant un dispositif destiné à évacuer les copeaux d'usinage (2) en matière plastique ou matériaux similaires, selon l'une quelconque des revendications 1 à 13.
